# EUROPEAN PATENT SPECIFICATION

(11) **EP 2 415 281 B1**
(45) Date of publication and mention of the grant of the patent: **30.11.2016**
(21) Application number: 10723253.0
(22) Date of filing: 25.03.2010
(51) Int. Cl.: H04W 4/02, H04N 21/258, H04W 4/08

(54) **LOCATION-BASED MESSAGING SYSTEM**
STANDORTABHÄNGIGES BENACHRICHTIGUNGSSYSTEM
SYSTÈME DE MESSAGERIE BASÉ SUR LA LOCALISATION

(30) Priority: 31.03.2009 EP 09250967
(43) Date of publication of application: 08.02.2012
(73) Proprietor: British Telecommunications Public Limited Company, London EC1A 7AJ (GB)
(72) Inventor: McCAHILL, Craig, Douglas, London E3 2HH (GB); GOWER, Andrew, Peter, Suffolk IP2 8BG (GB)
(74) Representative: Nash, Roger William
(86) International application number: PCT/GB2010/000579
(87) International publication number: WO 2010/112819

(56) References cited:
- WO-A-02/071365
- US-A1- 2007 270 166

## Description

The present invention relates to a location-based messaging system and a method of providing location-based messaging.

International patent application WO 02/071365 includes a proposal in which a pre-defined group of users is tracked, and a message is sent to each of that pre-defined group of users should they all happen to be within a certain distance of one another or all happen to be within a certain distance of the average location of the members of the group.

US Patent application US 2007/0270166 discloses a system which groups users in dependence on how desirable their attention is to advertisers. It also proposes sending advertisements to all opted-in customers within the vicinity of a store.

Like other known location-based messaging systems, the above systems provide a poor experience to groups of people who are sharing an experience mediated by a location-based message system (for example, a location-based game, a location-based educational experience, or location-based tourist information). Despite wishing to share the same experience, in practice such groups of people find that they receive different messages.

According to the present invention there is provided a method of providing location-based messaging, said method comprising:
finding one or more positional characteristics of a set of wireless message-receiving devices;
finding one or more subsets of wireless message-receiving devices, the members of which subsets have similar positional characteristics;
identifying said subset as a group on the basis of those individuals sharing similar positional characteristics;
calculating an average location for the group;
sending to each member of each group, the same group-specific message appropriate to the average location of the group.

By identifying groups of individuals consequent to those individuals sharing similar positional characteristics, thereafter calculating an average location for the group, and supplying location-based information to each member of the identified group as though each member of the group were at the average location, the likelihood of a group of individuals who consider themselves as a group receiving the same messages is improved.

In general, grouping might also enable subsequent processing to be applied at the group-level leading to more scalable distributed system.
In some embodiments the one or more positional characteristics include location. In preferred embodiments, the one or more positional characteristics further include a measure of rate of change of location such as velocity or speed (the latter possibly being accompanied by heading or direction).

In preferred embodiments, groups of mobile devices are identified by clustering the mobile devices by identifying groups of mobile devices which have greater similarity in their positional characteristics relative to one another than they have similarity in their positional characteristics relative to other mobile devices outside the group.
There now follows a description of specific embodiments of the present invention. This description is given with reference to the accompanying drawings in which:
Figure 1 shows a portable computer and a plurality of location-aware mobile electronic devices in wireless communication with the portable computer;
Figure 2 illustrates the hardware and software in each of the location-aware mobile electronic devices;
Figure 3 illustrates the hardware and software in the portable computer;
Figure 4 shows a mobile device movements data object;
Figure 5 shows a mobile group data object;
Figure 6 is a flow-chart illustrating the operation of the portable computer under control of a group recognition software module;
Figure 7 is a flow-chart illustrating a message sending portion of an location-aware application running on the portable computer;
Figure 8 is a flow-chart illustrating a k-means algorithm used to cluster the mobile devices into groups;
Figure 9 shows the movement of the mobile devices over a time interval.

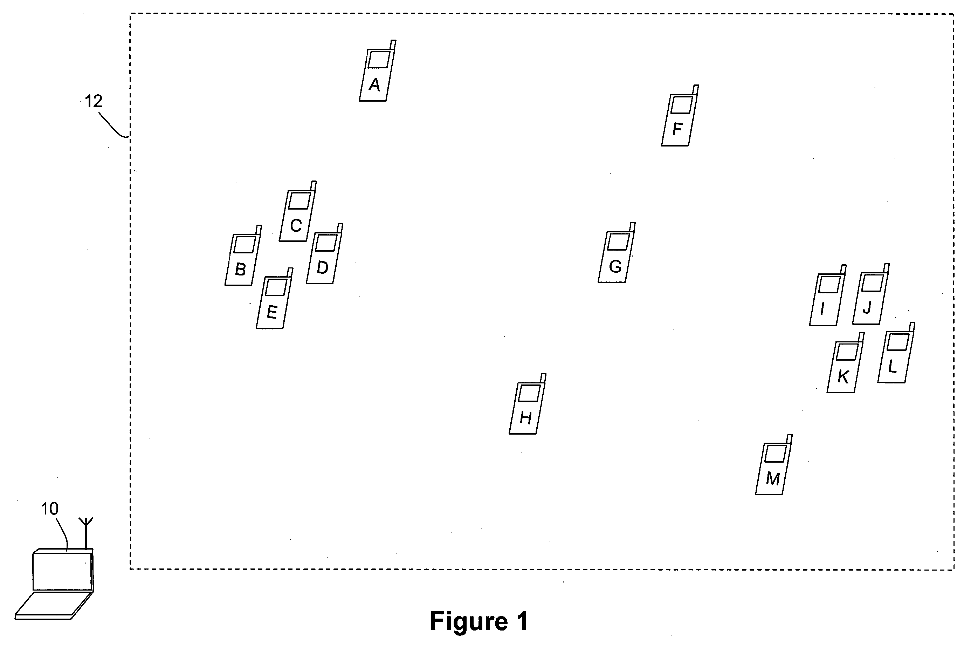

Figure 1 shows apparatus used in the provision of a location-based educational experience provided to thirteen users, each carrying a mobile device (A-M) having a display and loudspeaker which provide users with information which depends on their location within an experience area which, in this example, is a rectangle of 100 metres in length and 65 metres in width. The size of the experience area might be smaller or much greater than this, and the area might be of any shape. Each mobile device (A-M) has a satellite positioning system signal receiver and communicates its location to a portable computer 10 using a wireless communication link with the portable computer 10. The portable computer 10 runs location-based group application software which stores experience data which associates virtual objects and virtual beings with different locations in the experience area 12. The application might update the experience data over time to allow the virtual objects and beings to move around or through the experience area or for various events or changes of behaviour in the object or being to occur. The users experience the virtual environment through images and text displayed on the screens of their mobile devices which represent the current state of the objects or beings at or close to their location in the experience area. The mobile devices (A-M) may also represent the current state of the virtual environment at their location by producing sounds using their loudspeaker.

In order to allow the users to act as a group in the virtual environment thus generated (for example by ganging up to capture a virtual animal at a given location in the experience area), the portable computer 10 further runs a group recognition software module which tracks the movement of each user, and generates and updates group data which represents groups of users whose movements have a degree of similarity which exceeds a predetermined threshold.

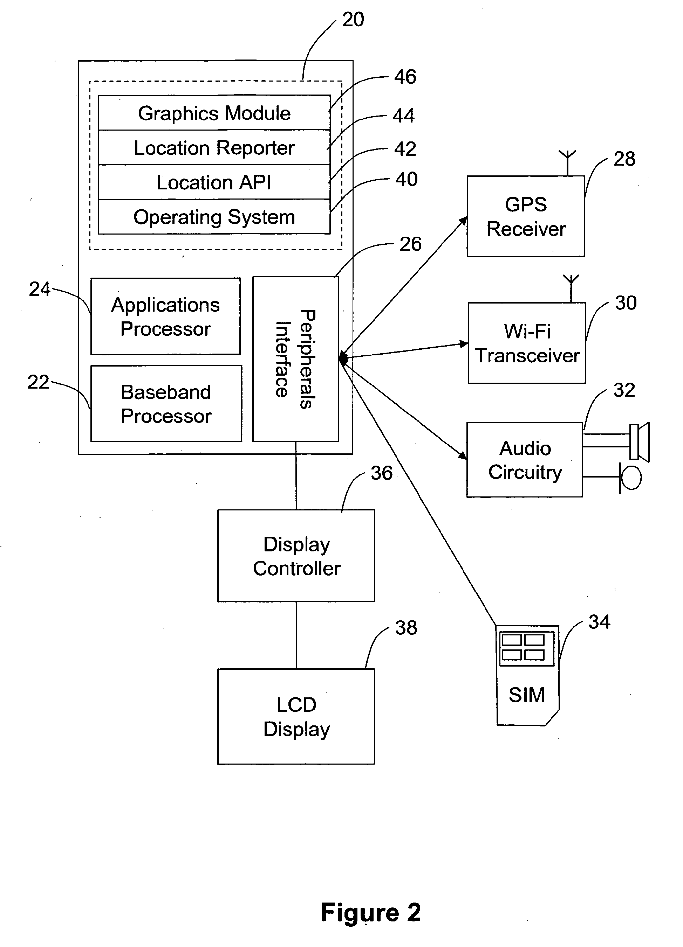

Figure 2 shows the components of each mobile device (A-M) used in the present embodiment. Programmable mobile devices offering the necessary functionality are available - for example smartphones such as the Google Android G1 (a Google Android G1 has the advantage that it can run an application such as that described here as a background process). Each mobile device has persistent storage 20, volatile memory (not shown), a baseband processor 22 for carrying out digital signal processing and such-like associated which decoding radio signals received at the mobile device, and encoding speech, image, video or other data sent from the device, an application processor 24 for executing application programs stored in the persistent storage 20 and volatile memory, and a peripherals interface integrated circuit 26 for providing an electronic interface to various other components of the mobile device. The persistent storage 20, volatile memory, baseband processor 22, applications processor 24 and peripherals interface integrated circuit are interconnected via one or more system busses (not shown).

Peripherals present in the mobile device and communicating via the peripheral interface IC 26 include a Liquid Crystal Display 38 and its accompanying display controller IC 36, a Subscriber Identity Module (SIM) card reader 34 containing a SIM card which provides unique identification of the user, audio circuitry 32 for providing the mobile device with mobile telephony capabilities and for generating application-generated sounds to be heard by the user, a Wi-Fi transceiver 30 for sending and receiving Wi-Fi signals, and a Global Positioning System signal receiver for receiving signals from satellites which the receiver can process to calculate the mobile device's location to the nearest few metres. As will be understood by those skilled in the art, the positioning system may also take account of local base stations and/or local wireless access points and the signal strength from them in determining the position of the mobile device.

The persistent storage 20 stores an operating system program 40 for the mobile device, a location API software module 42 providing those writing applications for the mobile device with an application programmers interface which allows application programs to retrieve data representing the mobile device's location stored in the mobile device, location reporter software 44 which controls the mobile device to periodically send a Wi-Fi message including details of the mobile device's location to the portable computer 10, and a graphics module 46 which renders multimedia data received by the mobile device on the mobile device's display 38.

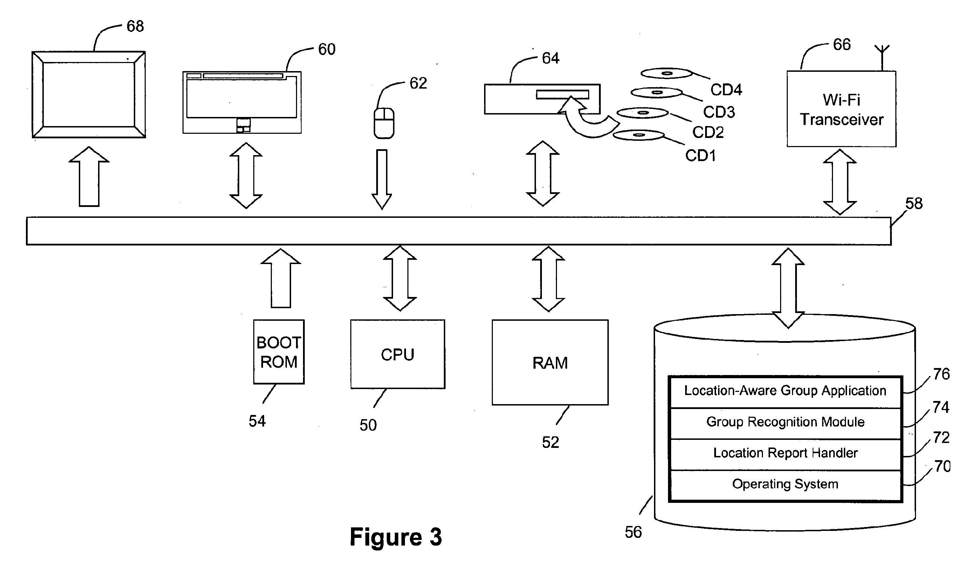

Figure 3 shows the portable computer 10 which comprises well-known hardware components connected together in a conventional manner. The well-known hardware components comprise a central processing unit 50, random access memory 52, read-only memory 54, a hard disk 56 and input/output devices 60,62,64,66, and 68. The hardware components are interconnected via one or more data and address buses 58. The input/output devices comprise a keyboard 60, a mouse 62, a CD-ROM drive 64 a wireless transceiver card 66 and a display 68.

The persistent storage 20 stores an operating system program 70 for the portable computer 10, a location report handler software module 72, a group recognition software module 74, and the location-aware group application program 76.

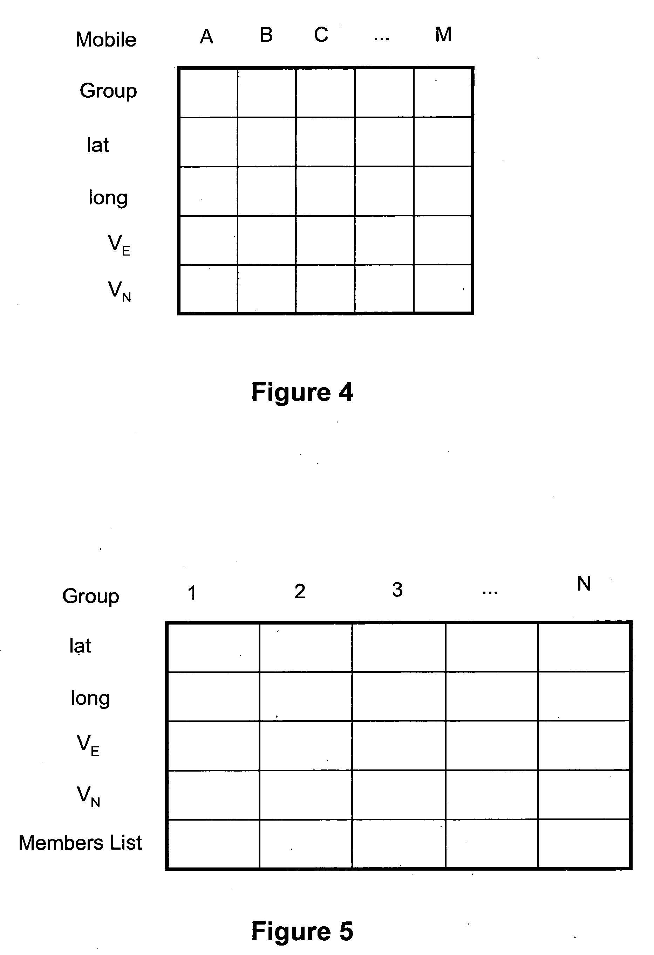

Figure 4 shows the structure of a mobile device movements data object stored in the random access memory 52 of the portable computer 10 during the execution of the group recognition software by the portable computer 10. The mobile device movements data object records, for each mobile device, a group ID identifying the group to which the mobile is deemed to belong by the group recognition module, the latitude and longitude of the mobile device's most recently reported location, and the magnitudes of the mobile device's velocity in easterly and northerly directions. These fields are initially set to null values but updated during the execution of the group recognition software 74 as will be explained below.

Figure 5 shows a mobile device group data object stored in the random access memory 52 of the portable computer 10 during the execution of the group recognition software by the portable computer 10. The mobile device group data object records, for each group of mobile devices identified by the group recognition module, the (possibly weighted) average position of the members of the group in a four-dimensional space defined by latitude, longitude, easterly velocity and northerly velocity. The mobile device group data object also records the members (if any) of each group. The number of groups is set equal to the number of mobile devices present in the experience area. Those skilled in the art will realise that there are many ways in which the average location or centre of the group could be calculated - by way of non-limiting example, the centroid of a polygon whose vertices are defined by the positions of the group members might be found, or the average northerly and easterly distances from a given position (which might itself be the position of one of the group members).

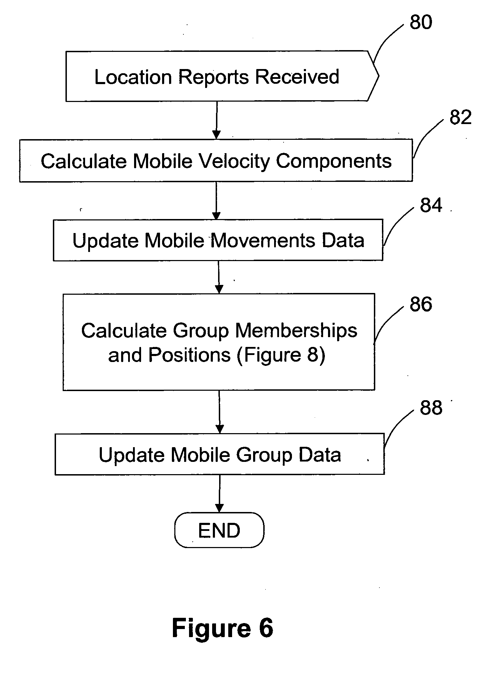

Figure 6 shows a group recognition process carried out by the portable computer at regular time intervals (e.g. every second). Each mobile device (A-M) is controlled by the location reporter software which it is executing to send a location report every second to the portable computer 10. The precise timings of the location reports can be set during a registration phase when the mobiles (A-M) indicate to the portable computer 10 that they wish to partake in the educational experience. This, in combination with universal time signals gathered by the mobile devices using their GPS receivers 28 can be used to control the mobile devices to send a burst of time-separated location reports in a fraction of a second every second.

On receiving (step 80) such a burst of location reports from the registered mobile devices (A-M), the portable computer 10 first calculates (step 82) the easterly and northerly velocity components from: the previous locations stored in the mobile movements data object; the current locations just received; and the time period between the arrival times of the previous and current set of location reports. The calculated velocity components, and the latitude and longitude data just received are then stored (step 84) in the mobile movements data object.

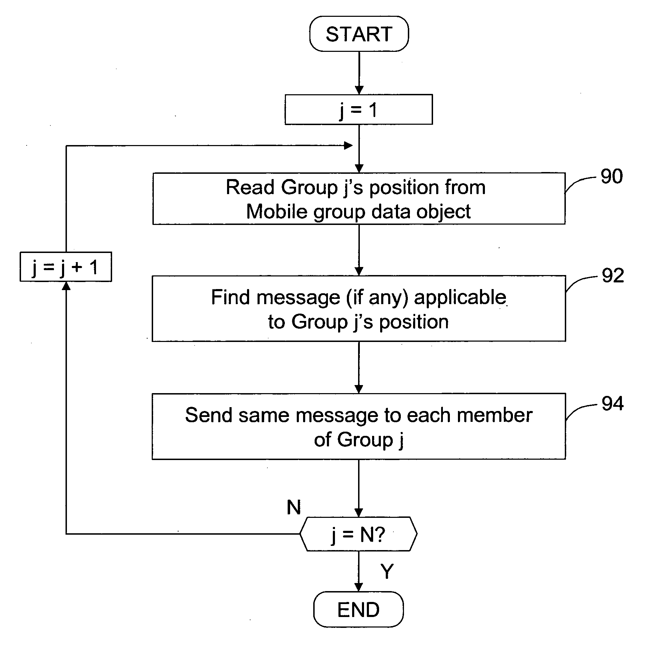

The portable computer then executes the group recognition software 74 to cluster (step 86) the mobile devices (A-M) into groups as will be explained below in relation to Figure 7. The cluster process updates (step 88) the mobile group data object (Figure 5).

Figure 7 illustrates a portion of the location-aware application program 76 which uses the mobile group data object as updated by the group recognition process (Figure 6) to control the generation of application messages to the mobile devices. The application, for each of the thirteen groups, reads (step 90) the position of the group (by reading the latitude and longitude values from the mobile group data object (Figure 5)), finds (step 92) any message or image for visual output on display 38 and/or acoustic output from the loudspeaker 32 given the position of the group and the current time and/or state of the experience, and then sends the message to each of the mobile devices listed as members of the group in the mobile device group data object (Figure 5).

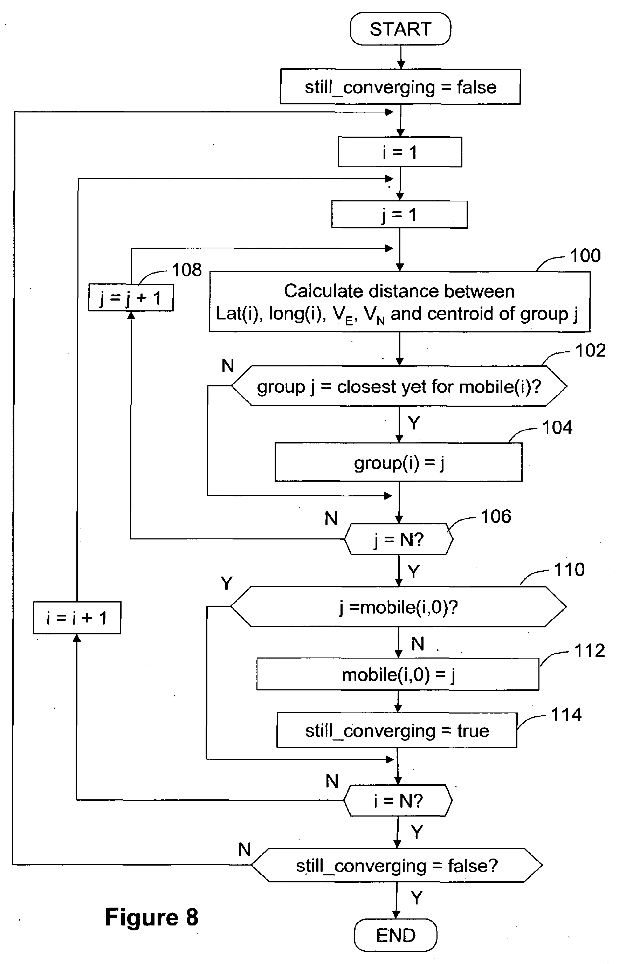

Figure 8 illustrates an implementation of the k-means algorithm to cluster the mobile devices (A-M) into groups in dependence on the position and motion of the mobile devices (A-M). The implementation repeats an assignment of mobile devices (A-M) to groups until the repetition of the assignment no longer changes the assignment of the mobile devices (A-M) to groups.

Each iteration of the group assignment involves, for each mobile device (A-M), finding (steps 100-108) the group whose dynamic centre (the lat, long, easterly velocity, and northerly velocity of the group stored in the mobile group data object) most closely matches the lat, long, easterly velocity and northerly velocity of the mobile device (A-M) under consideration, and then comparing the result to the mobile device data object (Figure 4) to find (step 110) whether the group to which the mobile device belongs has changed. If it has changed, then the mobile device data object (Figure 4) is altered (step 112) to reflect the mobile devices (A-M) new group, and a flag is set (step 114) to indicate that another iteration of the group assignment (steps 100 - 114) must be carried out before the mobile group recognition process (Figure 8) is able to end.

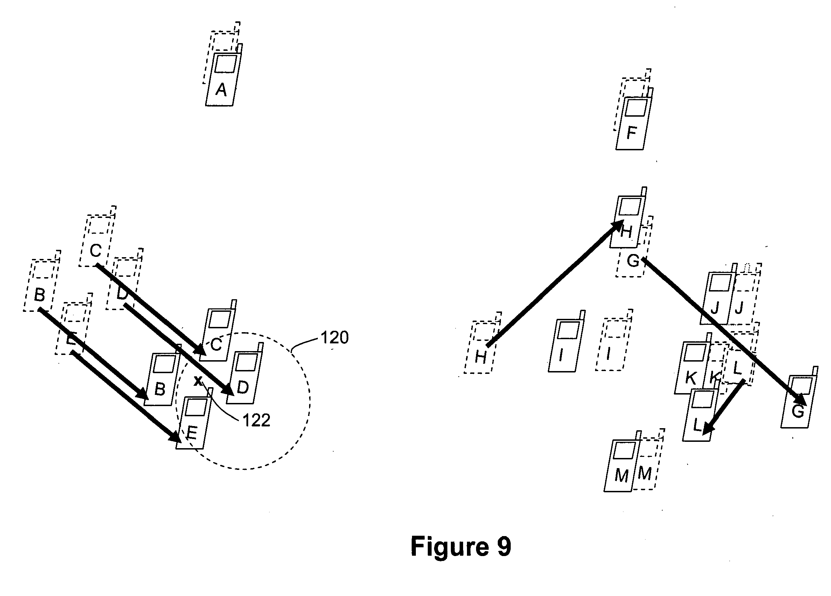

Figure 9 illustrates a possible movement of the thirteen mobile devices over a one second period. Since the above clustering algorithm takes account of the mobile devices' velocity as well as their position, the mobile devices B,C,D,E will be identified as belong to a group. Hence, if the location-aware application defines the circular region 120 as a region of interest in which a particular virtual object or being is to be found, then since the average position of the group members 122 lies within the circular region 120, in the above embodiment all four mobile devices B,C,D,E will receive the same message pertaining to the virtual object or being. This is an improvement over prior-art methods which would consider mobile device B to be outside the region of interest 120, thereby annoying the user of mobile device B by not providing him with the same message as that shared by other members of the group with whom he is currently moving.

It will be seen how the above embodiment overcomes the problem of groups of users receiving different messages by using a single location to represent a group of users rather than separate locations for each individual user. In this way the users within an area have a consistent experience and positional inaccuracies are reduced by the averaging of the positional data between the group members.

Variations on the above-described embodiments include:
i) rather than sending the same location-based message to the members of the group, the members of the group might be sent the same message, irrespective of where the group might currently be - for example, the message might instruct the group to go to a particular location from wherever they might currently be;
ii) in the above embodiment, each mobile device's velocity components were calculated using the mobile device's current position, its previous position and the time elapsed since the mobile device was in its previous position. In alternative embodiments, the location data sent by each mobile device might include, for example, its speed and direction, and the velocity components might be calculated from that data instead.
iii) in the above embodiment, the message sent to each mobile device depended on the location of the group to which the mobile belongs. In other embodiments, the message sent to each member of each group might further depend on the current time, or on other factors such as the position of other mobiles or groups.
iv) in the above embodiment the Global Positioning System is used as a geolocation technology. However Wi-Fi connection location and strength, visibility of fixed Bluetooth radios, might be used instead of, or in addition, to satellite positioning technology (for example the Global Positioning System, but other satellite positioning technologies such as the GLONASS system or the Galileo system might be used instead).
v) in the above embodiment, each user had one device. However, different applications might have a number of users sharing a device, or some or all users carrying a number of devices.
vi) in the above embodiment, the mobile devices conveyed the current state of the virtual environment to their user using their graphical display and/or loudspeaker. More advanced mobile devices could additionally provide haptic input to the user (e.g. by vibrating).
vii) in the above embodiment, the apparatus was used to provide the users with an educational experience. In other embodiments it could be used to send members of a group the same
   - Located Advertising for shops, etc, e.g. "Special Offers Today"
   - Located Information for facilities, shops, etc,e.g. "Open from 9.00 till 3.30"
   - Located Reviews and Recommendations, "I liked this restaurant"
   - Located Games, "Discovery Trail" and "Hide and Seek".
   - Located Educational Experiences "What would you have seen here in 1066?"
   - Located Tourism "Mozart was born here in 1756"
viii) in the above embodiment, the location-based application, including the detection of groups, was carried out by a portable computer. However, in alternative embodiments the location-based application, including the detection of groups could be carried out by a fixed computer which sends and receives data to and from the mobile devices via a Wi-Fi hub connected to the computer across a fixed network.

In summary of the above, apparatus for supporting a location-based application is disclosed. The apparatus comprises a plurality of mobile devices which report their locations to an application computer. The application computer then periodically or occasionally sends the mobile devices a message (textual, speech, photo or video etc.) which depends upon the reported location of the mobile device. A problem with known apparatus of this type arises when a plurality of users are partaking in the same location-based application together, but receive different messages because their positions are not identical. The location-based application supporting apparatus disclosed here overcomes this problem by first identifying mobile devices which are moving as a group, and then sending all members of that group the same location-based message. The solution is of particular utility in relation to located information, advertising, or reviews for shops, restaurants etc., located games, located educational experiences and location tourism.

## Claims

1. A method of providing location-based messaging, said method comprising:
finding one or more positional characteristics of a set of wireless message-receiving devices (A-M);
finding one or more subsets of wireless message-receiving devices (A-M), the members of which subsets have similar positional characteristics;
said method being **characterised by**
identifying said subset as a group on the basis of those individuals sharing similar positional characteristics;
calculating (86) the centre of said group; and
sending (94) to each member of said group, the same group-specific message appropriate to the location at the centre of said group.

2. A method as claimed in claim 1 wherein said wireless message-receiving devices (A-M) are personal wireless message-receiving devices (A-M), wherein the identification of a subset of devices (A-M) as a group comprises the identification of a group of persons carrying personal wireless message-receiving devices (A-M) as a group.

3. A method as claimed in claim 1 wherein said positional characteristics indicate the location of each wireless message-receiving devices (A-M) and the rate of change of its location.

4. A method as claimed in claim 3 wherein said location is represented by a plurality of co-ordinates and said rate of change of location is represented by the rate of change of one or more or all of said plurality of co-ordinates.

5. A method according to claim 1 wherein finding subsets of devices (A-M) which have similar positional characteristics involves applying a clustering algorithm to said positional characteristics to identify said subsets of devices (A-M).

6. A computer (10) arranged in operation to support a location-based application, said computer (10) comprising:
a wireless receiver (30) arranged in operation to receive one or more positional characteristics of a set of wireless message-receiving devices (A-M);
a data processor (24);
a wireless transmitter (30);
i) said data processor being arranged in operation to find one or more subsets of wireless message-receiving devices (A-M), the members of which subsets have similar positional characteristics;
said computer (10) being **characterised by**:
said data processor (24) being arranged in operation to:
ii) identify said subsets as groups; and
iii) calculate (86) the centre of each said group; and
said wireless transmitter (30) being arranged in operation to send the same group-specific message appropriate to the location of the centre of each said group to each member of said group.

7. A location-based application system comprising a computer (10) according to claim 6 and a plurality of mobile devices (A-M), each mobile device having a location finder (28) and a wireless receiver (30) and transmitter (30) arranged in operation to send reports of the wireless device's location to said computer (10) and to receive messages specific to the group to which the computer (10) currently deems the mobile device to belong.

## Patentansprüche

1. Verfahren zum Bereitstellen ortsbasierender Benachrichtigungen, mit:
Ermitteln eines oder mehrerer Positionskennwerte eines Satzes von drahtlos Nachrichten empfangenden Vorrichtungen (A-M);
Ermitteln eines oder mehrerer Untersätze drahtlos Nachrichten empfangender Vorrichtungen (A-M), wobei die Mitglieder der Untersätze ähnliche Positionskennwerte haben;
**gekennzeichnet durch**
Identifizieren des Untersatzes als eine Gruppe auf der Grundlage derjenigen Individuen, die ähnliche Positionskennwerte haben;
Berechnen (86) des Zentrums der Gruppe; und
Senden (94) an jedes Mitglied der Gruppe der gleichen gruppenspezifischen Nachricht, die für den Ort in der Mitte der Gruppe geeignet ist.

2. Verfahren nach Anspruch 1, bei dem die drahtlos Nachrichten empfangenden Vorrichtungen (A-M) persönliche drahtlos Nachrichten empfangende Vorrichtungen (A-M) sind, wobei die Identifizierung eines Untersatzes von Vorrichtungen (A-M) als eine Gruppe das Identifizieren einer Gruppe von Personen, die drahtlos Nachrichten empfangende Vorrichtungen (A-M) tragen, als Gruppe aufweist.

3. Verfahren nach Anspruch 1, bei dem die Positionskennwerte den Ort eines jeden drahtlos Nachrichten empfangenden Geräts (A-M) und die Änderungsrate seines Orts angeben.

4. Verfahren nach Anspruch 3, bei dem der Ort durch mehrere Koordinaten angegeben ist und die Änderungsrate des Orts durch die Änderungsrate eines oder mehrerer oder aller der Koordinaten dargestellt ist.

5. Verfahren nach Anspruch 1, bei dem das Ermitteln von Untersätzen von Vorrichtungen (A-M) mit ähnlichen Positionskennwerten das Anwenden eines Cluster-Algorithmus auf die Positionskennwerte aufweist, um die Untersätze von Vorrichtungen (A-M) zu ermitteln.

6. Computer (10), der dazu ausgelegt ist, in Betrieb eine ortsbasierte Anwendung zu unterstützen, mit:
einem drahtlosen Empfänger (30), der dazu ausgelegt ist, in Betrieb einen oder mehrere Positionskennwerte eines Satzes von drahtlos Nachrichten empfangenden Vorrichtungen (A-M) zu empfangen;
einem Datenprozessor (24);
einem drahtlosen Sender (30);
1) wobei der Datenprozessor dazu ausgelegt ist, in Betrieb einen oder mehrere Untersätze von drahtlos Nachrichten empfangenden Vorrichtungen (A-M) zu finden, deren Mitglieder ähnliche Positionskennwerte haben;
wobei der Computer (10) **dadurch gekennzeichnet ist, dass**:
der Datenprozessor (24) dazu ausgelegt ist, in Betrieb:
ii) die Untersätze als Gruppen zu identifizieren; und
iii) das Zentrum jeder Gruppe zu berechnen (86); und
wobei der drahtlose Sender (30) dazu ausgelegt ist, in Betrieb die gleiche gruppenspezifische Nachricht, die für den Ort des Zentrums einer jeden Gruppe angemessen ist, an jedes Mitglied der jeweiligen Gruppe zu senden.

7. Ortsbasiertes Anwendungssystem mit einem Computer (10) nach Anspruch 6 und mehreren mobilen Geräten (A-M), wobei jedes mobile Gerät ein Ortungsgerät (28) und einen Drahtlosempfänger (30) und Sender (30) hat, die dazu ausgelegt sind, in Betrieb Berichte über den Ort der drahtlosen Vorrichtung an den Computer (10) zu senden und Nachrichten spezifisch für diejenige Gruppe zu empfangen, zu der der Computer (10) momentan das mobile Gerät als zugehörig ansieht.

## Revendications

1. Procédé de fourniture de messagerie basée sur la localisation, ledit procédé comprenant :
la recherche d'une ou plusieurs caractéristique(s) positionnelle(s) d'un ensemble de dispositifs (A-M) de réception de messages sans fil ;
la recherche d'un ou plusieurs sous-ensemble(s) de dispositifs (A-M) de réception de messages sans fil, les éléments desquels sous-ensembles ont des caractéristiques positionnelles similaires ;
ledit procédé étant **caractérisé par**
l'identification dudit sous-ensemble comme un groupe sur la base des dispositifs individuels partageant des caractéristiques positionnelles similaires ;
le calcul (86) de centre dudit groupe ; et
l'envoi (94) à chaque élément dudit groupe du même message spécifique au groupe approprié à la localisation au centre dudit groupe.

2. Procédé selon la revendication 1 dans lequel lesdits dispositifs (A-M) de réception de messages sans fil sont des dispositifs (A-M) de réception de messages sans fil personnels, dans lequel l'identification d'un sous-ensemble de dispositifs (A-M) comme un groupe comprend l'identification d'un groupe de personnes portant des dispositifs (A-M) de réception de messages sans fil personnels comme un groupe.

3. Procédé selon la revendication 1 dans lequel lesdites caractéristiques positionnelles indiquent la localisation de chaque dispositif (A-M) de réception de messages sans fil et la vitesse de changement de sa localisation.

4. Procédé selon la revendication 3 dans lequel ladite localisation est représentée par une pluralité de coordonnées et ladite vitesse de changement de localisation est représentée par la vitesse de changement d'une ou de plusieurs ou de la totalité de ladite pluralité de coordonnées.

5. Procédé selon la revendication 1 dans lequel la recherche de sous-ensembles de dispositifs (A-M) qui ont des caractéristiques positionnelles similaires implique l'application d'un algorithme de groupement auxdites caractéristiques positionnelles pour identifier lesdits sous-ensembles de dispositifs (A-M).

6. Ordinateur (10) agencé en fonctionnement pour supporter une application basée sur la localisation, ledit ordinateur (10) comprenant :
un récepteur sans fil (30) agencé en fonctionnement pour recevoir une ou plusieurs caractéristique (s) positionnelle(s) d'un ensemble de dispositifs (A-M) de réception de messages sans fil ;
un processeur de données (24) ;
un émetteur sans fil (30) ;
i) ledit processeur de données étant agencé en fonctionnement pour chercher un ou plusieurs sous-ensemble(s) de dispositifs (A-M) de réception de messages sans fil, les éléments desquels sous-ensembles ont des caractéristiques positionnelles similaires ;
ledit ordinateur (10) étant **caractérisé par** :
ledit processeur de données (24) étant agencé en fonctionnement pour :
ii) identifier lesdits sous-ensembles comme des groupes ; et
iii) calculer (86) le centre de chaque dit groupe ; et
ledit émetteur sans fil (30) étant agencé en fonctionnement pour envoyer le même message spécifique au groupe approprié à la localisation du centre de chaque dit groupe à chaque élément dudit

7. Système d'application basé sur la localisation comprenant un ordinateur (10) selon la revendication 6 et une pluralité de dispositifs mobiles (A-M), chaque dispositif mobile ayant un système de recherche de localisation (28) et un récepteur (30) et un émetteur (30) sans fil agencés en fonctionnement pour envoyer des rapports de la localisation du dispositif sans fil audit ordinateur (10) et pour recevoir des messages spécifiques au groupe auquel l'ordinateur (10) considère couramment que le dispositif mobile appartient.
